# NEUE EUROPÄISCHE PATENTSCHRIFT

(11) **EP 1 303 741 B2**
(45) Veröffentlichungstag und Bekanntmachung des Hinweises auf die Entscheidung über den Einspruch: **09.11.2011**
(45) Hinweis auf die Patenterteilung: 15.06.2005
(21) Anmeldenummer: 01953905.5
(22) Anmeldetag: 10.07.2001
(51) Int. Cl.: G01C 21/34

(54) **INFORMATIONS- UND STEUERUNGSSYSTEM FÜR FAHRZEUGE**
INFORMATION AND CONTROL SYSTEM FOR VEHICLES
SYSTEME D'INFORMATION ET/OU DE COMMANDE POUR VEHICULES

(30) Priorität: 15.07.2000 DE 10034499
(43) Veröffentlichungstag der Anmeldung: 23.04.2003
(73) Patentinhaber: ROBERT BOSCH GMBH, 70442 Stuttgart (DE)
(72) Erfinder: HOLZE, Harald, CH-1024 Ecublens (CH); IBANEZ, Miguel, CH-1203 Genève (ES); SCHWEIZER, Philippe, 1318 Pompaples (CH)
(86) Internationale Anmeldenummer: PCT/DE2001/002570
(87) Internationale Veröffentlichungsnummer: WO 2002/006772

(56) Entgegenhaltungen:
- EP-A- 0 346 491
- EP-A- 0 524 814
- EP-A- 0 780 823
- EP-A- 0 995 973
- DE-A- 3 700 552
- DE-A- 19 821 585
- DE-A- 19 821 803
- DE-C- 19 600 734
- GB-A- 2 289 560

## Beschreibung

### Stand der Technik

Die vorliegende Erfindung betrifft ein Informations- und/oder Steuerungssystem für ein Fahrzeug, das eine Positioniereinheit zum Ermitteln einer aktuellen geographischen Position des Fahrzeuges, eine Karteneinheit, die Information zumindest über von dem Fahrzeug fahrbare Wege enthält, und eine Schnittstelleneinheit zum selektiven Ausgeben von Information aus der Karteneinheit in Abhängigkeit von der aktuellen geographischen Position des Fahrzeugs umfaßt.

Derartige Systeme sind zum Beispiel als Kraftfahrzeug-Navigationssysteme im Einsatz. Sie umfassen als Positioniereinheit einen Empfänger für ein Satellitensignal wie etwa ein GPS-Signal, durch dessen Vermessung eine Information über die aktuelle geographische Position des mit dem Navigationssystem ausgestatteten Fahrzeugs mit hoher Genauigkeit gewonnen werden kann. Durch Abgleich dieser Positionsinformation mit in einer Karteneinheit gespeicherter Information ist ein solches System in der Lage, unter einer Mehrzahl von Wegen, über die Information in der Karteneinheit gespeichert ist, denjenigen herauszufinden, auf dem sich das Fahrzeug befindet, und über eine Schnittstelleneinheit zum Beispiel eine Landkarte der Umgebung der aktuellen Position des Fahrzeugs auf einem Bildschirm anzuzeigen. Häufig umfassen derartige Systeme ferner Mittel, durch die ein Benutzer ein Fahrziel in das System eingeben kann, woraufhin das System anhand der in der Karteneinheit gespeicherten Information eine Route zu dem gewünschten Ziel auswählt und den Fahrer im Laufe der Fahrt laufend mit Informationen versorgt, die er benötigt, um dieser Route folgen zu können, indem es ihr vor einer Abzweigung darauf aufmerksam macht, daß er die gegenwärtig befahrene Straße verlassen muß, und in welche Richtung er weiterfahren muß.

Die Informationen, die die meisten derartigen Systeme liefern, ist aber auf eben jenes Minimum beschränkt, was ein Fahrer braucht, um einer vorgegebenen Route folgen zu können.

Ein erster Schritt in Richtung einer Erweiterung der Fähigkeiten dieser bekannten Informations- und Steuerungssysteme wurde in DE 195 48 487 A1 gemacht. Hier wird die von einer Positioniereinheit mit Hilfe eines Satellitensignals gewonnene aktuelle Positionsinformation und die von einer Karteneinheit gelieferte Information über den Verlauf eines Weges genutzt, um die Ausrichtung von Frontscheinwerfern eines Fahrzeugs angepaßt an den vor dem Fahrweg liegenden Straßenverlauf derart zu steuern, daß die Scheinwerfer des Fahrzeugs, noch bevor dieses eine Kurve erreicht, seitwärts ausgelenkt werden, um so die vor dem Fahrzeug liegende Straße auf einer längeren Strecke auszuleuchten, als dies mit herkömmlichen Frontscheinwerfern möglich ist.

Dieses bekannte System umfaßt ein sogenanntes Steuergerät, das Informationen von der Positioniereinheit über die aktuelle Position des Fahrzeugs sowie Informationen von der Karteneinheit über den Verlauf und die örtliche Lage der Straße empfängt, auf der sich das Fahrzeug gerade befindet. Anhand der Informationen über den vor dem Fahrzeug liegenden Straßenverlauf berechnet das Steuergerät fort laufend die notwendige bzw. optimale Lichtverteilung des Scheinwerfersystems und steuert die Scheinwerfer dementsprechend an.

Dieses System erfordert eine erhebliche Rechenleistung, da ständig vorausschauend der Krümmungsradius der vor dem Fahrzeug liegenden Straße berechnet werden muß. Außerdem ist seine Anwendbarkeit auf die Steuerung der Fahrzeugscheinwerfer beschränkt.

In der DE-A-37 00 552 wird ein Verfahren zur Ausgabe von Weginformationen offenbart. Zusätzlich zu gespeicherten geographischen Daten einer elektronischen Straßenkarte werden sicherheitsrelevante Informationen bestimmter Wegabschnitte gespeichert.

### Vorteile der Erfindung

Durch die vorliegende Erfindung wird ein Informations- und/oder Steuersystem für ein Fahrzeug geschaffen, das es erlaubt, beliebige Eigenschaften eines vor dem Fahrzeug liegenden Weges zu berücksichtigen und den Fahrer mit Informationen über diese Eigenschaften zu versorgen oder Funktionsgruppen des Fahrzeugs direkt in Abhängigkeit von diesen Eigenschaften anzusteuern.

Dies wird durch die Merkmale des vorliegenden Anspruchs 1 erreicht. Die Merkmale des Oberbegriffs des Anspruchs 1 sind aus DE-A-3 700 552 zu entnehmen. Durch die punktuelle Zuordnung der Information zu einer geographischen Position anstatt zu einer ausgedehnten Wegstrecke wird der Betrieb eines solchen Systems erheblich vereinfacht, denn durch die Zuordnung der Information zu einer einzelnen Position erübrigt sich eine vorausschauende Untersuchung eines vollständigen Wegabschnittes. Das heißt: Um mit dem erfindungsgemäßen System zum Beispiel die Scheinwerfer eines Fahrzeugs an den Wegverlauf angepaßt zu steuern, genügt es, wenn die für das Durchfahren einer Kurve optimale Lichtverteilung der Scheinwerfer ein einziges Mal berechnet und in Zuordnung zu einer geographischen Position gespeichert wird. Diese Berechnung und Zuordnung kann zweckmäßigerweise bereits beim Hersteller des Systems bzw. der Karteneinheit erfolgen. Das erfindungsgemäße Informations- und/oder Steuerungssystem braucht über die für derartige Berechnungen erforderliche Rechenleistung nicht zu verfügen, es ist völlig ausreichend, wenn das System in der Lage ist, zu erfassen, daß die vorgegebene Grenzentfernung zu dem virtuellen Verkehrszeichen unterschritten worden ist.

Die daraus resultierende Verringerung des Rechenaufwandes ermöglicht es zum Beispiel, eine Vielzahl von Eigenschaften des fahrbaren Weges, auf dem sich das Fahrzeug befindet, bei der Steuerung des Fahrzeuges zu berücksichtigen.

Gemäß einer Variante kann das System einen Signalgeber umfassen, der das virtuelle Verkehrszeichen von der Schnittstelleneinheit empfängt und eine Meldung über dieses,virtuelle Verkehrszeichen an einen Fahrer des Fahrzeugs ausgibt. Dies ermöglicht es dem Fahrer, seine Fahrweise an eine eventuell vorausliegende, potentiell gefährliche Verkehrssituation anzupassen, noch bevor er selber in der Lage ist, die Gefahrenstelle zu sehen. Eine solche Meldung kann zum Beispiel von einer Sprachausgabeeinheit ausgegeben werden, die zum Beispiel vor der Einfahrt in einen Tunnel den Fahrer auffordern kann, die Fahrzeugbeleuchtung einzuschalten, und die ihn nach der Ausfahrt aus dem Tunnel daran erinnert, diese wieder zu löschen.

Erfindungsgemäß ist die direkte Steuerung von Funktionsgruppen des Fahrzeugs in Abhängigkeit von einem virtuellen Verkehrszeichen. So kann zum Beispiel die Schnittstelleneinheit an das Beleuchtungssystem eines Fahrzeugs gekoppelt sein und selbsttätig vor der Einfahrt in einen Tunnel die Fahrzeugbeleuchtung einschalten und nach der Ausfahrt sie wieder ausschalten.

Die virtuellen Verkehrszeichen erfassen zwei Typen von Verkehrszeichen: Beim ersten Typ derartiger Verkehrszeichen ist zum Beispiel ein Grenzwert der Entfernung von 0 zugeordnet, und ihre geographische Position ist so festgelegt, daß das Fahrzeug diese geographische Position erreicht, kurz bevor es den Abschnitt erreicht, auf dessen Eigenschaften sich das virtuelle Verkehrszeichen bezieht. Auf den oben erwähnten Beispielfall des Tunnels übertragen bedeutet dies, daß ein virtuelles Verkehrszeichen mit der Bedeutung "Scheinwerfer einschalten" oder "Scheinwerfer ausschalten" jeweils in einem kurzen Abstand vor dem Tunnelanfang bzw. Tunnelende "aufgestellt" ist, und daß die Aufforderung zum Licht Einschalten an den Fahrer ergeht oder, im Falle des zweiten Beispiels, die Steuerschaltung das Licht selbsttätig anschaltet, wenn das Fahrzeug die Position des virtuellen Verkehrszeichens passiert.

Virtuellen Verkehrszeichen von diesem ersten Typ ist vorzugsweise eine Richtung zugeordnet, mit der Wirkung, daß die Schnittstelleneinheit das virtuelle Verkehrszeichen nur ausgibt, wenn sich das Fahrzeug aus der zugeordneten Richtung nähert.

Beim zweiten Typ von virtuellen Verkehrszeichen ist der Grenzwert der Entfernung, der unterschritten werden muß, damit das virtuelle Verkehrszeichen ausgebbar wird, von 0 verschieden. In diesem Fall kann die geographische Position des virtuellen Verkehrszeichens in dem Abschnitt des Weges liegen, auf dessen Eigenschaften sich das virtuelle Verkehrszeichen bezieht, denn durch geeignete Festlegung des Grenzwerts der Entfernung kann dennoch sichergestellt werden, daß das virtuelle Verkehrszeichen ausgegeben wird, bevor das Fahrzeug den Abschnitt des Weges erreicht, auf den es sich bezieht. Derartige Verkehrszeichen können für beide Richtungen wirksam sein; sie erfordern daher weniger Speicherplatz als virtuelle Verkehrszeichen des ersten Typs.

Außerdem erlauben sie es, den Grenzwert der Entfernung als Funktion der Geschwindigkeit des Fahrzeugs festzulegen. Das heißt indem dieser Grenzwert mit zunehmender Fahrzeuggeschwindigkeit größer gewählt wird, kann erreicht werden, daß das virtuelle Verkehrszeichen in einem Abstand des Fahrzeugs von dem betreffenden Abschnitt ausgegeben wird, der um so größer ist, je größer die Geschwindigkeit des Fahrzeugs ist. So bleibt dem Fahrer bzw. einer durch die Schnittstelleneinheit gesteuerten Funktionsgruppe des Fahrzeugs auch bei hoher Geschwindigkeit genügend Zeit, auf das virtuelle Verkehrszeichen zu reagieren.

Zweckmäßigerweise ist die Schnittstelleneinheit des Informations- und/oder Steuersystems an wenigstens einen Sensor des Fahrzeugs gekoppelt und dadurch in der Lage, das virtuelle Verkehrszeichen in Abhängigkeit von einem Erfassungsergebnis des Sensors auszugeben oder nicht auszugeben. Ein solcher Sensor kann ein Sensor für Umgebungsgrößen, zum Beispiel ein Hell-/Dunkelsensor sein, der ein virtuelles Verkehrszeichen zum Einschalten der Fahrzeugbeleuchtung an einem Tunnelanfang nur bei Tageslicht, nicht aber bei Nacht ausgibt. Es kann sich auch um einen Sensor für fahrzeuginterne Größen handeln, zum Beispiel einen Sensor, der den Ein-/Aus-Zustand eines Fahrzeugbeleuchtungsschalters erfaßt und das virtuelle Verkehrszeichen zum Ein- oder Ausschalten nur ausgibt, wenn die Fahrzeugbeleuchtung an dem Schalter ausgeschaltet ist.

Virtuelle Verkehrszeichen können sich gemäß der Erfindung auf eine Vielzahl unterschiedlicher Typen von Information beziehen. So können die Informationen über einen Wegabschnitt zum Beispiel betreffend:
eine Krümmung,
eine Steigung,
einen Engpass,
ein lokal erhöhtes Glatteisrisiko, zum Beispiel in einer Bodensenke in der Nähe eines Gewässers,
einen Gegenstand von touristischem Interesse,
eine Tankstelle oder eine Werkstatt.

Die Information, die das virtuelle Verkehrszeichen beinhaltet, kann auch eine an die jeweiligen Eigenschaften des Abschnitts angepaßte Steuerreaktion definieren, zum Beispiel kann sie einen Schaltbefehl für ein Automatikgetriebe, einen Ein-/Ausschaltbefehl für Scheinwerfer des Fahrzeugs, wie oben bereits erwähnt, oder einen Steuerbefehl zum Steuern der Lichtverteilung der Scheinwerfer umfassen.

Weitere Merkmale und Vorteile der Erfindung ergeben sich aus der nachfolgenden Beschreibung eines Ausführungsbeispiels mit Bezug auf die beigefügten Figuren.

### Figuren

Es zeigen:
Figur 1 ein Informations-.und/oder Steuerungssystem für ein Kraftfahrzeug gemäß der Erfindung;
Figur 2 eine Landkarte, wie sie anhand der in einer herkömmlichen Karteneinheit gespeicherten Informationen von dem Informations- und Steuersystem anzeigbar ist;
Figur 3 eine Datenstruktur, die jeweils einen Weg in der Karte aus Figur 2 beschreibt;
Figur 4 eine Karte ähnlich der aus Figur 2, allerdings mit virtuellen Verkehrszeichen;
Figur 5 eine zur Erzeugung der Karte aus Figur 4 geeignete Datenstruktur.

### Beschreibung der Ausführungsbeispiele

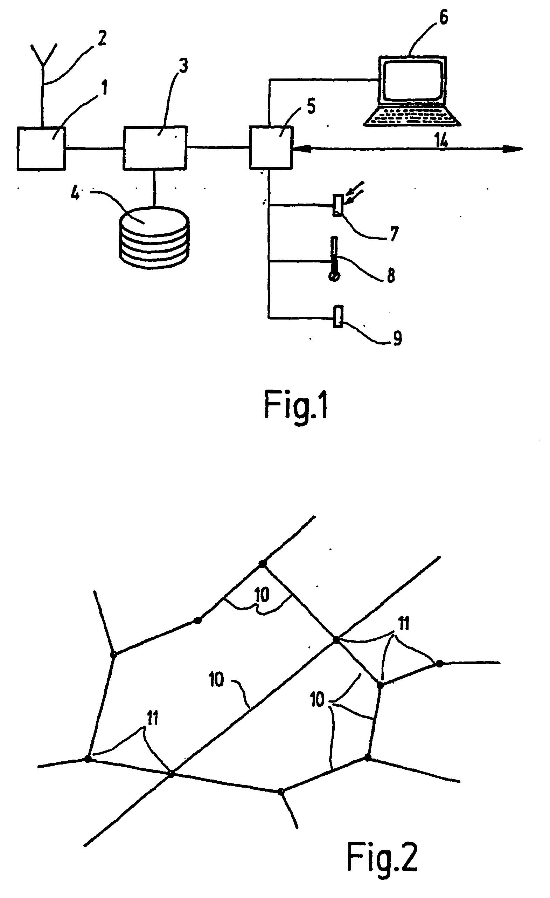

Figur 1 zeigt anhand eines Blockdiagramms ein erfindungsgemäßes Informations- und/oder Steuerungssystem für ein Kraftfahrzeug. Es umfaßt eine Positioniereinheit 1 zum Ermitteln einer aktuellen geographischen Position des Kraftfahrzeugs. Beim hier betrachteten Beispiel handelt es sich um eine GPS-Einheit, die mit Hilfe einer Antenne 2 GPS-Satellitensignale empfängt und aus diesen eine aktuelle geographische Position des Kraftfahrzeugs berechnet, anstelle der GPS-Einheit oder ergänzend zu dieser könnte die Positioniereinheit auch mit Instrumenten wie etwa einem Gyrometer oder Odometer für ein Koppelnavigationsverfahren ausgestattet sein.

An die Positioniereinheit 1 ist eine Recheneinheit 3 angeschlossen, die die von der Positioniereinheit 1 gelieferte aktuelle Positionsinformation mit von einer Karteneinheit 4 gelieferter Information über die geographischen Positionen von Wegen in Beziehung setzt, die das Fahrzeug befahren kann. Die Karteneinheit 4 kann zum Beispiel als ein CD-ROM-Laufwerk ausgebildet sein, in dem sich eine oder mehrere CD-ROMs mit Karteninformationen befinden.

Durch Verknüpfen der von der Positioniereinheit 1 und der Karteneinheit 4 gelieferten Informationen ist die Recheneinheit 3 in der Lage, die aktuelle geographische Position des Fahrzeugs mit einer größeren Genauigkeit zu bestimmen, als dies gegenwärtig bei der zivilen Nutzung des GPS-Systems allein oder mit anderen bekannten Techniken der Ortsbestimmung durch Instrumente möglich ist. Dies wird zum Beispiel erreicht, in dem die Recheneinheit 3 von der Prämisse ausgeht, daß sich das Fahrzeug nur auf in der Karteneinheit 4 gespeicherten Wegen befinden kann. Falls einer von der Positioniereinheit 1 gelieferten aktuellen Positionsinformation ein solcher Weg nicht eindeutig zugeordnet werden kann, kann die Positioniereinheit 1 zusätzlich die über die Positioniereinheit 1 ermittelbare Bewegungsrichtung des Fahrzeugs mit der Richtung der Wege verknüpfen und so in der Regel zu einer eindeutigen Positionsbestimmung gelangen.

Über eine Schnittstelleneinheit 5 ist die Recheneinheit 3 mit einer Konsole 6 im Fahrgastraum verbunden, die einen Bildschirm zum Anzeigen von Karteninformation sowie ein Bedienfeld aufweist. Das Bedienfeld dient zum Beispiel einem Fahrer des Kraftfahrzeugs dazu, ein Reiseziel einzugeben, woraufhin die Recheneinheit 3 anhand der Karteninformation einen guten Vorschlag ausarbeiten und auf dem Bildschirm der Konsole 6 anzeigen kann. Ein Lautsprecher zum Ausgeben von Sprachmeldungen an den Fahrer kann ebenfalls im Fahrgastraum vorhanden sein.

Ferner ist die Schnittstelleneinheit 5 mit mehreren Sensoren verbunden, hier einem Helligkeitssensor 7, einem Außentemperatursensor 8 und einem Feuchtigkeitssensor 9.

Eine eventuelle Verbindung zu einem Datenbus des Kraftfahrzeugs, etwa eines MOST- oder LAN-Netzwerks, ist mit 14 bezeichnet. Sie ermöglicht den Austausch von Dateien oder allgemein von information mit anderen Steuergeräten des Kraftfahrzeugs oder mit weiteren Sensoren. Auch der Helligkeitssensor 7, der Außentemperatursensor 8 und der Feuchtigkeitssensor 9 können - abweichend von der Darstellung der Figur - über die Verbindung 14 und den Bus mit der Schnittstelleneinheit 5 kommunizieren.

Figur 2 zeigt idealisiert einen Kartenausschnitt, wie er auf dem Bildschirm der Konsole 6 angezeigt werden könnte. Der Kartenausschnitt setzt sich aus einer Vielzahl von Wegen 10 zusammen, die jeweils zwei Knoten 11 miteinander verbinden. Je nach Kartenmaßstab kann es sich bei dem Knoten 11 um Ortschaften, Kreuzungen von überregionalen Straßen oder Autobahnauf- und -abfahrten handeln, oder auch um Straßenkreuzungen und -einmündungen innerhalb einer Ortschaft.

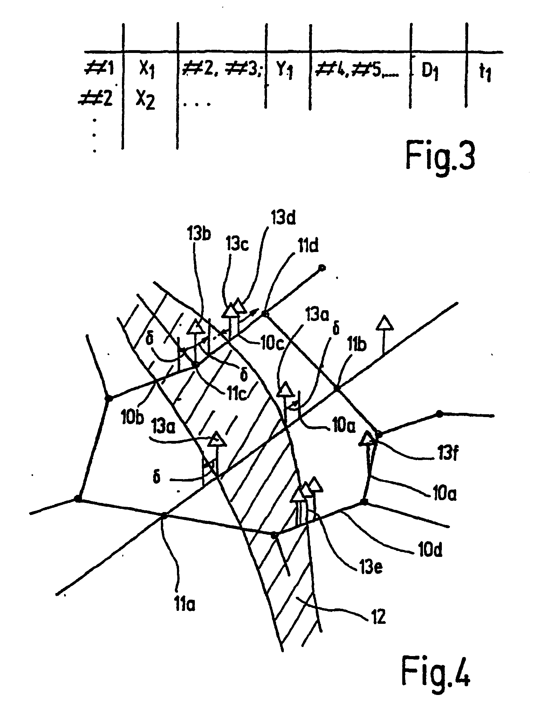

Jeder Weg 10 ist durch die in Figur 3 dargestellte Datenstruktur vollständig charakterisierbar. In dieser Datenstruktur ist jedem Weg eine Zeile zugeordnet, die jeweils in einer ersten Spalte.eine Bezeichnung des Weges wie etwa die Bezeichnung #1 für den ersten Weg der Datenstruktur, #2 für den zweiten, etc., enthält. In einer zweiten Spalte sind die geographischen Koordinaten X₁ eines Anfangsknotens dieses Weges und in einer dritten Spalte Bezeichnungen #2, #3 von anderen von diesem Anfangsknoten ausgehenden oder an ihm endenden Wegen angegeben. Spalten 4 und 5 enthalten jeweils die Koordinaten Y₁ eines Endknotens des Weges sowie Bezeichnungen #4, #5 von von diesem Endknoten ausgehenden oder dort endenden Wegen. Schließlich ist zu jedem Weg eine Angabe über die Länge D₁ oder gegebenenfalls eine Angabe t₁ über die voraussichtliche Fahrdauer des Weges vorgesehen.

Jeder Weg ist somit gekennzeichnet durch Lage seines Anfangs- bzw. Endknotens, die daran anschließenden Wege sowie ein Maß für die Länge und/oder Fahrzeit des Weges.

Figur 4 zeigt den gleichen Kartenausschnitt wie Figur 2, mit virtuellen Verkehrszeichen gemäß der vorliegenden Erfindung versehen. Der schraffierte Streifen 12, der sich diagonal durch den Kartenausschnitt erstreckt, soll ein Tal darstellen. Der Weg 10a ist zum Beispiel ein Autobahnabschnitt zwischen zwei Auffahrten 11a, 11b. Er umfaßt eine Brücke, die das Tal überspannt. Den beiden Köpfen der Brücke sind in den Daten der Karteneinheit 4 jeweils virtuelle Verkehrszeichen 13a mit der Bedeutung "Seitenwindgefahr" zugeordnet. Diese virtuellen Verkehrszeichen 13a sind vorgesehen, um in Form einer optischen oder akustischen Warnmeldung an den Fahrer des Fahrzeugs ausgegeben zu werden, wenn sich dieser der Brücke nähert. Daher ist den virtuellen Verkehrszeichen zum einen eine Richtung zugeordnet, wodurch gewährleistet ist, daß sie nur beim Auffahren des Fahrzeugs auf die Brücke, nicht aber beim Herunterfahren, ausgegeben werden. Ferner ist ihnen ein geschwindigkeitsabhängiger Grenzwert δ der Entfernung zugeordnet, derart, daß wenn das Fahrzeug den Grenzwert der Entfernung zum virtuellen Verkehrszeichen 13a unterschreitet, dieses ausgegeben wird. Dieser Grenzwert δ wächst mit zunehmender Geschwindigkeit, d.h. der Fahrer wird in einem Abstand vor der Brücke vor der Gefahr gewarnt, der um so größer ist, je größer seine Geschwindigkeit ist, um ihm Gelegenheit zu geben, seine Geschwindigkeit ohne abrupte Bremsung anzupassen.

Die Wege 10b, 10c führen über den Knoten 11c ebenerdig durch das Tal 12. Hier ist dem Knoten 11c ein virtuelles Verkehrszeichen 13b mit der Bedeutung "Glatteisgefahr" zugeordnet. Dieses virtuelle Verkehrszeichen 13b ist in beide Richtungen wirksam; auch ihm ist eine geschwindigkeitsabhängige Mindestentfernung δ zugeordnet.

Da dieses virtuelle Verkehrszeichen 13b nur bei entsprechenden Außentemperaturen sicherheitsrelevant ist, wird es von der Schnittstelleneinheit 5 nur dann als Warnmeldung an den Fahrer ausgegeben, wenn der Außentemperatursensor 8 Temperaturen in Gefrierpunktnähe oder darunter meldet.

Der Weg 10c führt mit einer beträchtlichen Steigung aus dem Tal heraus. Ihm sind deshalb in Figur 4 zwei virtuelle Verkehrszeichen zugeordnet, ein erstes Zeichen 13c, das nur für ein aus dem Tal 12 kommendes Fahrzeug wirksam ist und dieses, falls es ein Automatikgetriebe besitzt, veranlaßt, im Vorfeld der Steigung bereits den Gang zurückzunehmen. Diesem Verkehrszeichen 13c kann ein Grenzwert der Entfernung von 0 zugeordnet sein, d.h. es wird genau dann wirksam, wenn das Fahrzeug seine Position passiert.

Das virtuelle Verkehrszeichen 13d beinhaltet eine Gefällewarnung und ist nur für talwärts fahrende Fahrzeuge wirksam.

Der Weg 10d, der ebenfalls aus dem Tal 12 auf die Anhöhe führt, beinhaltet eine Reihe von scharfen Kurven. Dem Weg 10d ist deshalb eine Gruppe von virtuellen Verkehrszeichen 13e zugeordnet, die für lenkbare Frontscheinwerfer des Fahrzeugs jeweils Anweisungen über die Richtung beinhalten, in die die Scheinwerfer ausgerichtet werden sollen, um die Fahrbahn im Bereich der Kurve möglichst vollständig auszuleuchten. Da die virtuellen Verkehrszeichen 13e sämtliche zum Steuern der Scheinwerfer erforderliche Information liefern, ist es nicht notwendig, daß die Auflösung der Karten der Karteneinheit 4 fein genug ist, um eine Berechnung des Krümmungsradius der Kurven vor dem Durchfahren zu ermöglichen. Die Recheneinheit 3 kommt daher mit einer relativ geringen Verarbeitungsleistung aus, ist aber dennoch in der Lage virtuelle Verkehrszeichen mit einer Vielzahl unterschiedlicher Informationsgehalte zu berücksichtigen und gemäß diesen Informationsgehalten in die Fahrzeugsteuerung einzugreifen oder den Fahrer zu warnen.

Die Verarbeitung in der Recheneinheit 3 gestaltet sich besonders einfach, wenn den diversen unterschiedlichen virtuellen Verkehrszeichen jeweils der gleiche geschwindigkeitsabhängige Entfernungsgrenzwert oder ein Entfernungsgrenzwert von 0 zugeordnet wird. In diesem Fall ist es für die Erfassung aller am Weg angeordneten virtuellen Verkehrszeichen ausreichend, daß solche virtuellen Verkehrszeichen erfaßt werden, an denen das Fahrzeug unmittelbar "vorbeifährt" oder die sich in der geschwindigkeitsabhängigen Grenzentfernung befinden. Eine vorausschauende Untersuchung der Darstellung des Weges in der Karteneinheit 4 über eine unbestimmte Strekkenlänge ist nicht erforderlich.

Das Konzept der virtuellen Verkehrszeichen gemäß der vorliegenden Erfindung ist nicht nur geeignet, um den Fahrer eines Fahrzeugs vor Gefahrensituationen am Wege zu warnen oder automatische Eingriffe in die Fahrzeugsteuerung vorzunehmen. Sie können auch andere Aufgaben wahrnehmen, die das Fahren vereinfachen oder angenehmer machen. So ist zum Beispiel an dem Weg 10e ein virtuelles Verkehrszeichen 13f angeordnet, das auf einen Aussichtspunkt bzw. auf einen Parkplatz hinweist, von wo aus der Aussichtspunkt bequem zu Fuß zu erreichen ist. Derartige virtuelle Verkehrszeichen können touristischen Attraktionen von beliebiger Art zugeordnet sein.

Zweckmäßigerweise ist an der Konsole 6 ein Bedienelement vorgesehen, das es dem Fahrer ermöglicht, die Ausgabe von virtuellen Verkehrszeichenn mit bestimmten Bedeutungsinhalten zu aktivieren oder zu sperren. Eine solche Möglichkeit ist nicht nur sinnvoll für virtuelle Verkehrszeichen, die auf Sehenswürdigkeiten hinweisen, die gleiche Möglichkeit kann zum Beispiel auch für virtuelle Hinweis-Zeichen auf Parkplätze, Tankstellen, Werkstätten oder dergleichen gegeben sein.

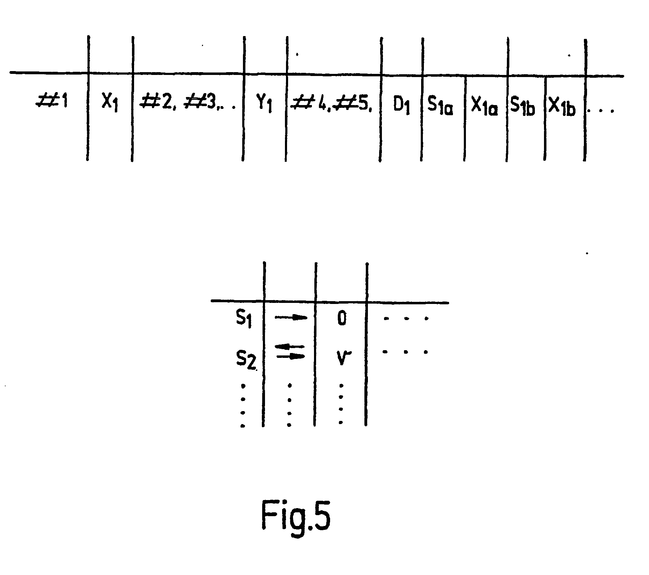

Figur 5 zeigt in Analogie zur Figur 3 die erweiterte Datenstruktur, mit der ein Weg in der Karteneinheit 4 gemäß der Erfindung dargestellt ist. Die ersten Datenfelder der Darstellung jedes Weges, die dessen Bezeichnung, Anfangs- und Endknoten und die daran anschließenden Wege sowie die Länge enthalten, sind die gleichen wie in Figur 3. Hinzu kommen zu jedem Weg Datenfelder, die für jedes virtuelle Verkehrszeichen dieses Weges seinen Typ s₁ₐ, s_{1b} ... sowie seine Position x₁ₐ, x_{1b}, ... charakterisieren, sowie für die unterschiedlichen Arten von virtuellen Verkehrszeichen ein Datenfeld, das für jeden Typ von Verkehrszeichen eine Bezeichnung s₁, s₂, ..., eine Angabe darüber, ob das Verkehrszeichen in eine oder beide Richtungen wirkt, hier symbolisiert durch ein oder zwei Pfeile, eine Angabe darüber, ob der Grenzwert der Entfernung für das virtuelle Verkehrszeichen Null oder geschwindigkeitsabhängig ist, sowie Angaben über die bei der Ausgabe des virtuellen Verkehrszeichenes durch die Schnittstelleneinheit zu treffenden Maßnahmen beinhaltet.

## Patentansprüche

1. Informations- und/oder Steuerungssystem für ein Fahrzeug mit einer Positioniereinheit (1) zum Ermitteln einer aktuellen geographischen Position des Fahrzeugs, einer Karteneinheit (4), die Information zumindest über von dem Fahrzeug fahrbare Wege (10a, 10b, ...) enthält, und einer Schnittstelleneinheit (5) zum selektiven Ausgeben von Information aus der Karteneinheit (4) in Abhängigkeit von der aktuellen geographischen Position, wobei in der Karteneinheit (4) ferner Information, als virtuelles Verkehrszeichen (13a, 13b ...) bezeichnet, über Eigenschaften eines Abschnitts eines fahrbaren Weges (10a, 10b ...) in Zuordnung zu einer geographischen Position an diesem Weg gespeichert ist und von der Schnittstelleneinheit (5) ausgebbar ist, wenn die Entfernung des Fahrzeugs von dieser geographischen Position einen Grenzwert unterschreitet, wobei die Schnittstelleneinheit (5) in der Lage ist, Funktionsgruppen des Fahrzeugs in Abhängigkeit von dem virtuellen Verkehrszeichen (13c) zu steuern,
**dadurch gekennzeichnet, dass** es virtuelle Verkehrszeichen (13c) eines ersten Typs umfasst, für die der Grenzwert der Entfernung Null ist und deren geographische Position so zugeordnet ist, dass das Fahrzeug diese geographische Position erreicht, kurz bevor es den Abschnitt erreicht, auf dessen Eigenschaften sich das virtuelle Verkehrszeichen (13c) bezieht,
und dass es virtuelle Verkehrszeichen (13a, 13b, 13d) eines zweiten Typs umfasst, für die der Grenzwert der Entfernung von Null verschieden ist und deren geographische Position in dem Abschnitt des Weges liegt, auf dessen Eigenschaften sich das virtuelle Verkehrszeichen bezieht.

2. Informations- und/oder Steuerungssystem nach Anspruch 1, **gekennzeichnet durch** einen Signalgeber (6) zum Empfangen des virtuellen Verkehrszeichens von der Schnittstelleneinheit (5) und zum Ausgeben einer Meldung an einen Fahrer des Fahrzeugs.

3. Informations- und/oder Steuerungssystem nach Anspruch 3, **dadurch gekennzeichnet, dass** dem virtuellen Verkehrszeichen (13a, 13c, 13d) eine Richtung zugeordnet ist, und dass die Schnittstelleneinheit (5) das virtuelle Verkehrszeichen nur ausgibt, wenn das Fahrzeug sich aus der zugeordneten Richtung nähert.

4. Informations- und/oder Steuersystem nach Anspruch 5, **dadurch gekennzeichnet, dass** der Grenzwert der Entfernung für ein virtuelles Verkehrszeichen des zweiten Typs eine Funktion der Geschwindigkeit des Fahrzeugs ist.

5. Informations- und/oder Steuerungssystem nach einem der vorhergehenden Ansprüche, **dadurch gekennzeichnet, dass** die Schnittstelleneinheit (5) an wenigstens einen Sensor (7,8,9) des Fahrzeugs gekoppelt und in der Lage ist, das virtuelle Verkehrszeichen (13b) in Abhängigkeit von einem Erfassungsergebnis des Sensors auszugeben oder nicht auszugeben.

6. Informations- und/oder Steuerungssystem nach einem der vorhergehenden Ansprüche, **dadurch gekennzeichnet, dass** das virtuelle Verkehrszeichen wenigstens einen der folgenden Typen von Information über den Wegabschnitt umfasst:
- über eine Krümmung,
- über eine Steigung,
- über einen Engpass;
- über ein erhöhtes Glatteisrisiko,
- über einen Gegenstand von touristischem Interesse,
- über eine Tankstelle und Werkstatt.

7. Informations- und/oder Steuerungssystem nach einem der vorhergehenden Ansprüche, **dadurch gekennzeichnet, dass** das virtuelle Verkehrszeichen wenigstens einen der folgenden Typen von Information umfasst:
- einen Schaltbefehl für ein Automatikgetriebe,
- einen Ein-/Ausschaltbefehl für Scheinwerfer des Fahrzeugs,
- einen Steuerbefehl zum Steuern der Lichtverteilung der Scheinwerfer.

## Claims

1. Information and/or control system for a vehicle having a positioning unit (1) for determining a current geographic position of the vehicle, a map unit (4) which contains information at least on routes (10a, 10b, ...) which can be travelled along by the vehicle, and an interface unit (5) for selectively outputting information from the map unit (4) as a function of the current geographic position, wherein in addition information, referred to as a virtual road sign (13a, 13b, ...) relating to properties of a section of a route (10a, 10b, ...) which can be travelled along is stored in the map unit (4) in association with a geographic position on this route and can be output by the interface unit (5) if the distance of the vehicle from this geographic position drops below a limiting value, wherein the interface unit (5) is capable of controlling function groups of the vehicle as a function of the virtual road sign (13c), **characterized in that** it comprises virtual road signs (13c) of a first type for which the limiting value of the distance is zero and its geographic position is assigned in such a way that the vehicle reaches this geographic position just before it reaches the section to whose properties the virtual road sign (13c) relates, and **in that** it comprises virtual road signs (13a, 13b, 13d) of a second type for which the limiting value of the distance is different from zero and its geographic position lies in the section of the route to whose properties the virtual road sign relates.

2. Information and/or control system according to Claim 1, **characterized by** a signal transmitter (6) for receiving the virtual road sign from the interface unit (5) and for outputting a message to a driver of the vehicle.

3. Information and/or control system according to Claim 1, **characterized in that** a direction is assigned to the virtual road sign (13a, 13c, 13d), and **in that** the interface unit (5) outputs the virtual road sign only if the vehicle approaches from the assigned direction.

4. Information and/or control system according to Claim 1, **characterized in that** the limiting value of the distance for a virtual road sign of the second type is a function of the velocity of the vehicle.

5. Information and/or control system according to one of the preceding claims, **characterized in that** the interface unit (5) is coupled to at least one sensor (7, 8, 9) of the vehicle and is capable of outputting or not outputting the virtual road sign (13b) as a function of a recording result of the sensor.

6. Information and/or control system according to one of the preceding claims, **characterized in that** the virtual road sign comprises at least one of the following types of information relating to the route section:
- relating to a bend,
- relating to a positive gradient,
- relating to a bottleneck;
- relating to an increased risk of ice,
- relating to an object of interest to tourists,
- relating to a filling station and garage.

7. Information and/or control system according to one of the preceding claims, **characterized in that** the virtual road sign comprises at least one of the following types of information:
- a switching instruction for an automatic transmission,
- an on/off switching instruction for headlights of the vehicle,
- a control instruction for controlling the light distribution of the headlights.

## Revendications

1. Système d'information et/ou de commande pour un véhicule comprenant une unité de positionnement (1) destinée à déterminer une position géographique actuelle du véhicule, une unité de cartes (4) qui contient des informations au moins sur les chemins (10a, 10b, ...) pouvant être empruntés par le véhicule, et une unité d'interface (5) pour délivrer de manière sélective des informations provenant de l'unité de cartes (4) en fonction de la position géographique actuelle, des informations, appelées des panneaux de circulation virtuels (13a, 13b, ...), sur les propriétés d'une portion d'un chemin pouvant être emprunté (10a, 10b, ...) étant en outre mémorisées dans l'unité de cartes (4) en association avec une position géographique sur ce chemin et pouvant être délivrées par l'unité d'interface (5) lorsque la distance du véhicule de cette position géographique devient inférieure à une valeur limite, l'unité d'interface (5) étant en mesure de commander les groupes fonctionnels du véhicule en fonction du panneau de circulation virtuel (13c), **caractérisé en ce qu'**il comprend des panneaux de circulation virtuels (13c) d'un premier type pour lesquels la valeur limite de la distance est égale à zéro et dont la position géographique est associée de telle sorte que le véhicule atteint cette position géographique juste avant d'atteindre la portion aux propriétés de laquelle se réfère le panneau de circulation virtuel (13c), et **en ce qu'**il comprend des panneaux de circulation virtuels (13a, 13b, 13d) d'un deuxième type pour lesquels la valeur limite de la distance est différente de zéro et dont la position géographique se trouve dans la portion du chemin aux propriétés duquel se réfère le panneau de circulation virtuel.

2. Système d'information et/ou de commande selon la revendication 1, **caractérisé par** un codeur de signal (6) destiné à recevoir le panneau de circulation virtuel de la part de l'unité d'interface (5) et destiné à émettre un message à l'attention d'un conducteur du véhicule.

3. Système d'information et/ou de commande selon la revendication 1, **caractérisé en ce qu'**une direction est associée aux panneaux de circulation virtuels (13a, 13c, 13d) et **en ce que** l'unité d'interface (5) ne délivre le panneau de circulation virtuel que lorsque le véhicule s'approche depuis la direction associée.

4. Système d'information et/ou de commande selon la revendication 1, **caractérisé en ce que** la valeur limite de la distance pour un panneau de circulation virtuel du deuxième type est une fonction de la vitesse du véhicule.

5. Système d'information et/ou de commande selon l'une des revendications précédentes, **caractérisé en ce que** l'unité d'interface (5) est connectée à au moins un capteur (7, 8, 9) du véhicule et elle est en mesure de délivrer ou de ne pas délivrer le panneau de circulation virtuel (13b) en fonction du résultat d'une détection du capteur.

6. Système d'information et/ou de commande selon l'une des revendications précédentes, **caractérisé en ce que** le panneau de circulation virtuel comprend au moins l'un des types d'informations suivants sur la portion de chemin .
- sur une courbure,
- sur une pente,
- sur un rétrécissement,
- sur un risque de verglas accru,
- sur un objet présentant un intérêt touristique,
- sur une station service et un garage automobile.

7. Système d'information et/ou de commande selon l'une des revendications précédentes, **caractérisé en ce que** le panneau de circulation virtuel comprend au moins l'un des types d'informations suivants :
- une instruction de changement de rapport pour une boîte de vitesses automatique,
- une instruction de mise en marche/arrêt des projecteurs du véhicule,
- une instruction de commande destinée à commander la distribution de lumière des projecteurs.
